# EUROPEAN PATENT APPLICATION

(11) **EP 1 760 667 A2**
(43) Date of publication of application: **07.03.2007**
(21) Application number: 06002153.2
(22) Date of filing: 02.02.2006
(51) Int. Cl.: G07C 9/00

(54) **Biometric identification device**

(30) Priority: 24.08.2005 US 210545
(71) Applicant: Agilent Technologies, Inc., Santa Clara, CA 95051 (US)
(72) Inventor: Nishimura, Ken A., Loveland, CO 80537-0599 (US); Wenstrand, John S., Loveland, CO 80537-0599 (US); Panotopoulos, Georgios, Loveland, CO 80537-0599 (US)
(74) Representative: Liesegang, Eva

(57) **Abstract**

A biometric identification device (6/12140160) includes a biometric sensor (30/62), an encryption factor (34), and a microprocessor (32). The biometric sensor is operable to sense a biometric characteristic (68/90) of a user (18) and to generate data representing the biometric characteristic. The microprocessor is coupled to the biometric sensor and is operable to generate a user key (26/92) based on the data representing the biometric characteristic and the encryption factor.

## Description

### Background

The expanding popularity of electronic commerce has increased the desire for secure electronic transactions and communications between remote parties. In particular, for most computer transactions and electronic contracts, there is no face-to-face acknowledgement of the identity of participating individuals and/or parties. With this in mind, institutions and persons desiring to utilize electronic commerce are faced with an issue of whether the person or party making a communication is truly who they claim to be.

In an attempt to receive some verification or indication of the identity of the person involved in the communication, the host system, such as financial business, or other electronic business, utilizes a method of authenticating a user. Generally, the identity of a user is authenticated with a password or similar access code. In particular, a user who wishes to make an electronic communication selects a password that preferably only he or she knows and registers the selected password with the host system or service provider. In other instances, the user is provided with a password by the host system. Typically, the password is a string of several numbers and/or letters.

When the user desires to communicate with the host system, the user provides the password to the host system over the communication network. The host system compares the password transmitted to the previously registered password, and if the two passwords match, the host system authorizes a user. If the passwords do not match, the user is not authorized and the transaction or communication is not completed or is cancelled. Once authorized, the user is free to make a financial transaction or electronic communication with the host system, and the host system generally assumes the user is the previously registered user.

The password, however, is often generated with several numbers and/or letters based on personal information, such as a telephone number, birth date, an ID number, etc. which may easily be discovered by others. In addition, if the user records the password to enable the user to later look up the password, the recorded password may be exposed to others. In still other situations, keystroke logging devices can be attached to a computer or communication device and are configured to record passwords and other information input to the computer by the user. An individual or party with access to the keystroke logging device subsequently accesses the device to determine passwords, transaction information, etc. Moreover, when the user submits his or her own password to the remote network server through a telephone line connection or other network communication connection for authentication, the password is also exposed to theft over the network communication lines. A stolen password can easily be used in future identity theft or other fraud. Namely, a non-user can utilize the user password to wrongfully pose as the user to complete transactions and/or communications with the host system.

In some instances, digital signatures have been used with electronic messages to provide a way for the sender of the message (i.e. the user) to electronically "sign" the message or transaction as a way of providing proof of the identity of the user and the authentication of the message. The digital signature system typically includes generation of a user private/public key pair including a user private key and a user public key. A user sends a message or requests a transaction using the private key. The sent message is.only decryptable using the corresponding user public key from the user private/public key pair. As such, even if the public key is available to a wide number of individuals, a host system able to decrypt a message with the public key is generally provided with assurance that the message originated with the user associated with the corresponding private key.

However, use of a private key has problems similar to those associated with passwords described above. In particular, private key information can be stolen through keystroke logging devices, through network communication lines, or by theft of the private key information from a notepad, database, or other user object storing the private key. Once an individual other than the user has access to the private key, the individual is able to wrongfully pose as the user utilizing the private key to communicate or transact with the host system.

Some authentication systems have attempted to decrease theft or other misuse of passwords or private keys by utilizing biometrics in place of or in addition to passwords or private keys. However, in such systems, an initiated biometric signature or template is typically stored for later comparison to a biometric input of a user or other individual wishing to complete an electronic transaction or electronic communication. The biometrics are compared in a manner similar to passwords and if a match is found, the electronic transaction or communication is permitted.

However, storage of the biometric characteristic provides an opportunity for the electronic representation of the biometric characteristic to be stolen and for the particular user to be impersonated by an individual having a stolen electronic representation of the particular biometric characteristic. In such cases, this step is particularly troublesome as a user cannot simply cancel a previous biometric characteristic and replace it with another biometric characteristic. For example, if a particular fingerprint of a user is registered with a host system, and the electronic representation of that fingerprint is stolen, the user cannot simply cancel use of that fingerprint with the host system and create a new fingerprint for future communications since the fingerprint data is permanently associated with the fingers of the user and, thus, cannot be changed. In such cases, the repercussions of theft of the authentication data provides additional problems further frustrating a user whose identity has been compromised and the host systems attempting to verify the user's identity.

With the above in mind, a need exists for an identity verification device that provides additional safeguards against the theft or other wrongful discovery and misuse of passwords, private keys, biometric characteristics and/or other identifying information.

### Summary

One aspect of the present invention provides a biometric identification device including a biometric sensor, an encryption factor, and a microprocessor. The biometric sensor is operable to sense a biometric characteristic from a user and to generate data representing the biometric characteristic. The microprocessor is coupled to the biometric sensor and is operable to generate a user key based on the data representing the biometric characteristic and the encryption factor.

### Brief Description of the Drawings

Embodiments of the invention are better understood with reference to the following drawings. Elements of the drawings are not necessarily to scale relative to each other. Like reference numerals designate corresponding similar parts.
Figure 1 is a block diagram illustrating one embodiment of a communication system including a biometric identification device.
Figure 2 is a block diagram illustrating one embodiment of a communication system including a biometric identification device.
Figure 3 is a block diagram illustrating one embodiment of a biometric identification device.
Figure 4 is a block diagram illustrating one embodiment of a biometric identification device.
Figure 5 is a perspective view illustrating one embodiment of the biometric identification device of Figure 4.
Figure 6 is a flowchart illustrating one embodiment of a method of communicating with a host system.
Figure 7 is a flowchart illustrating one embodiment of a method of communicating with a user.
Figure 8 is a diagram illustrating one embodiment of a combination of components to generate a user key pair.
Figure 9A is a diagram illustrating one embodiment of a combination of components to generate a doubly-encrypted symmetrical key.
Figure 9B is a diagram illustrating one embodiment of combination of components to generate a doubly-encrypted symmetrical key.
Figure 10 is a diagram illustrating one embodiment of a break down of component utilized to decrypt a doubly-encrypted symmetrical key.
Figure 11 is a flowchart illustrating one embodiment of a general communication method using a biometric identification device.
Figure 12 is a flowchart illustrating one embodiment of a method of registering a user with the biometric identification device as part of the method of Figure 11.
Figure 13 is a diagram illustrating how the flow charts of Figures 13A and 13B collectively illustrate one embodiment of a method of verifying a user and establishing a symmetrical key for a communication session within communication method of Figure 11.
Figure 13A is a flowchart illustrating a first portion of the method of Figure 13.
Figure 13B is a flowchart illustrating a second portion of the method of Figure 13.
Figure 14 is a block diagram illustrating one example embodiment of the biometric identification system of Figure 1.

### Detailed Description

In the following Detailed Description, reference is made to the accompanying drawings, which form a part hereof, and in which is shown by way of illustration specific embodiments in which the invention may be practiced. In this regard, any directional terminology is used with reference to the orientation of the Figure(s) being described. Because components of embodiments of the present invention can be positioned in a number of different orientations, the directional terminology is used for purposes of illustration and is in no way limiting. It is to be understood that other embodiments may be utilized and structural or logical changes may be made without departing from the scope of the present invention. The following Detailed Description, therefore; is not to be taken in a limiting sense, and the scope of the present invention is defined by the appended claims.

In one embodiment, a biometric identification device includes a biometric sensor and an encryption factor. During registration of the biometric identification device, the biometric sensor senses a biometric characteristic of a particular user. The biometric characteristic is employed in combination with the encryption factor to generate a private/public key pair. The public key, which is generated by the biometric identification device and a device identification code, is sent to the host system for use in future communications.

Communications made after registration of the biometric identification device involve utilizing the biometric sensor to collect a biometric characteristic from the bearer of the biometric identification device. The collected biometric characteristic is used in combination with the encryption factor to regenerate at least the user private key. The user private key is used to encrypt communications sent from the biometric identification device to the host system. If the user public key can be used to decrypt the verification or other message, then the user is verified (i.e., authenticated) as the user registered with the biometric identification device. The communication between the user and the host system can then be completed in a relatively secure manner. Additionally, the host system is provided with a more reliable method of verifying the identity of the user.

In one embodiment, the private key and data representing the biometric characteristic are not generally stored in a memory of the biometric identification device or other system component once a session of use is completed. Therefore, the private key or the data representing the biometric characteristic cannot easily be pirated or otherwise abused by third parties, such as thieves. Moreover, a lost or stolen biometric identification device can be replaced, where the new biometric identification device is registered with the host system to use the same user biometric characteristic with a different encryption factor to produce a different private/public key pair.

### Communication System

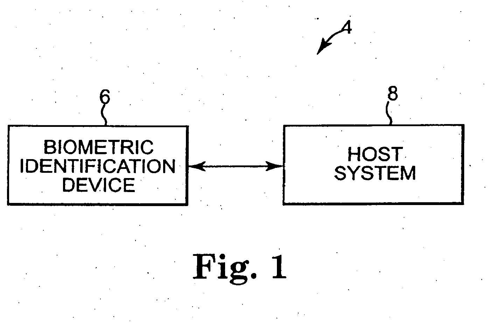

Turning to the figures, Figure 1 illustrates one embodiment of a communication system 4 including a biometric identification device 6 and a host system 8 in communication with biometric identification device 6. Biometric identification device 6 is configured to sense a biometric characteristic of a user and to generate a user key based on data representing the sensed biometric characteristic and an encryption factor stored in biometric identification device 6. In one embodiment, biometric identification device 6 is further configured to communicate with host system 8 by encrypting a message with the user key. In one example, encryption of the message with the user key provides host system 8 with verification of a true identity of a user of biometric identification device 6.

In one embodiment, during use, biometric identification device 6 sends an encrypted verification message to host system 8, which is configured to attempt to decrypt the received verification message using a user public key. If the attempt is successful, the bearer of biometric identification device 6 is verified as a registered user and subsequent communications occur between the user and host system 8 within the current communication session. For each future communication session completed between the user and host system 8, the user is re-verified with a different verification message. In one embodiment, the verification message is a symmetrical key and communications occurring after user verification are encrypted using the symmetrical key, as will be further described below.

In one embodiment, the verification message is encrypted using a user private/public key pair (i.e., an asymmetrical key pair). The biometric identification device 6 is configured to repeatedly generate the same user private/public key pair based upon a single biometric characteristic of the user. In contrast, different biometric characteristics, such as biometric characteristics of other individuals, will generate different user private/public key pairs. In one embodiment, the user private/public key pair generation and subsequent use are performed using the RSA algorithm method originated by Rivest, Shamir, and Adleman in 1977, for example in a manner consistent with the RSA Cryptology Standard (June 14, 2002), provided by RSA Security, Inc. Other suitable cryptology algorithms can be employed to generate and utilize the user private/public key pair. In one embodiment, other encryption schemes are used as an alternative to the user private/public key pair encryption.

In one embodiment, the user public key is stored in host system 8. However, neither the user private key nor data representing the user biometric characteristic is generally stored in any portion of communication system 4 after being used in a communication session. In such embodiments, theft of data representing the biometric characteristic and the user private key is decreased, thereby providing additional assurances to host system 8 that the subsequent communication is with a verified user. In one embodiment, the verification message is a symmetrical key, and a different symmetrical key is utilized in each communication session. The use of different symmetrical keys for each communication session also decreases the incentive for theft of the symmetrical key used in one session for unauthorized use in a subsequent session to impersonate the rightful user.

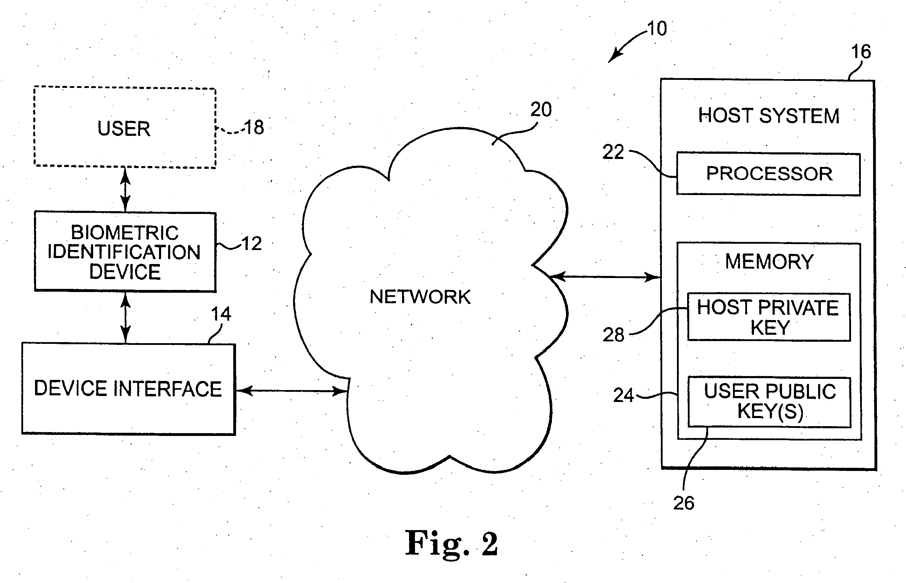

Figure 2 illustrates one exemplary implementation, which is generally indicated at 10, of the communication system 4 of Figure 1. Communication system 10 functions in a manner similar to communication system 4 (illustrated in Figure 1) and includes a biometric identification device 12, a device interface 14, and a host system 16: Biometric identification device 12 is configured to sense a biometric characteristic of a user 18, to generate a user private key based on the biometric characteristic, to generate a symmetrical key, and to communicate with host system 16 via device interface 14 in an encrypted form. More specifically, in one embodiment, the user private key is used to encrypt the generated symmetrical key to be sent to host system 16. The symmetrical key is used to encrypt future communications between biometric identification device 12 and host system 16.

Device interface 14 is configured to communicate with biometric identification device 12 and host system 16. More specifically, device interface 14 is configured to either wirelessly or directly connect with biometric identification device 12. In the case of a wireless connection between biometric identification device 12 and device interface 14, any wireless communication between biometric identification device 12 and device interface 14 may be further encrypted to enhance security of such communication. In exemplary wired and wireless embodiments, device interface 14 includes at least one of a conductive micromodule, a universal serial bus (USB) port, a serial RS-232 port, a parallel port, an infrared (IR) port, a radio frequency (RF) port such as Bluetooth, an IEEE-1394 port, a network port such as a wired Ethernet or wireless Ethernet connector, and any other suitable connector. In one embodiment, device interface 14 additionally includes an input mechanism and/or display to communicate directly with user 18 rather than via biometric identification device 12.

In one embodiment, device interface 14 is in communication with host system 16 via a communication link. In this embodiment, device interface 14 functions as a conduit for communication between user 18 and host system 16. In one example, the communication link includes a network 20. Network 20 as used herein is used to define and include any network connection such as an Internet communication link, an intranet communication link, or similar highspeed communication link. While the following description may generally refer to network 20 as being or including an Internet network, it is understood that the use of other network communication links is within the scope of the present invention. In addition, network 20 may be accessed wirelessly or via a direct wired contact. In another example, device interface 14 is part of host system 16.

Host system 16 is configured to securely communicate with user 18 via device interface 14 and biometric identification device 12. In one example, host system 16 is one of a financial institution, such as a bank, credit bureau, credit service, etc., a contract system, a system securing or facilitating secure communication between multiple users, an e-commerce server, an e-business, etc. In one embodiment, host system 16 includes a processor 22 and a memory 24. Processor 22 is configured to further process, encrypt, and decrypt communications being sent to or received from biometric identification device 12. In one embodiment, processor 22 is configured to be in at least periodic communication with memory 24 to access items in memory 24 to facilitate encryption and decryption of messages received from biometric identification device 12. In other embodiments, processor 22 is configured to autonomously perform encryption and decryption.

In this respect, data used in user registration (for example, a user public key) is stored in memory 24. In an exemplary embodiment, memory 24 includes a type of random access memory (RAM), a type of read-only memory (ROM), a type of non-volatile memory, and/or other suitable memory type. In one embodiment, memory 24 stores one or more user public keys 26 and a host system private key 28. The user public keys 26 stored in host system 16 are each part of a user private/public key pair. Each user public key 26 is configured to facilitate decryption of messages encrypted with the corresponding user private key. In one embodiment, each user public key 26 is stored in host system 16 to correspond with an identification code of the respective biometric identification device 12.

In one embodiment, which utilizes double encryption (i.e. encryption to verify the identity of both user 18 and host system 16), a host system private key 28 is also stored in memory 24. Host system private key 28 is assigned to a particular,host system 16 and corresponds to a host system private/public key pair. The host system public key is accessible by biometric identification device 12, and therefore, biometric identification device 12 can use the host system public key to decrypt received communications that host system 16 previously encrypted using host system private key 28. Similarly, host system 16 can use host system private key 28 to decrypt communications that biometric identification device 12 previously encrypted using the host system public key.

### Biometric Identification Device

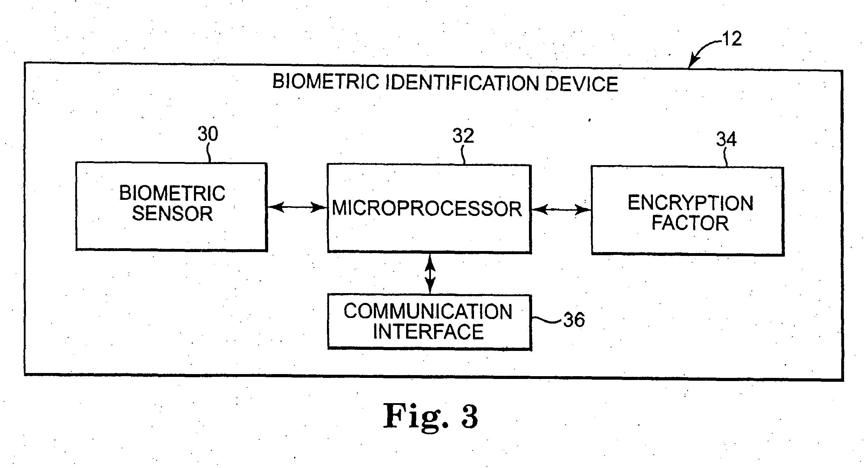

Figure 3 is a block diagram more particularly illustrating one embodiment of biometric identification device 12. Biometric identification device 12 is any suitable device configured to sense a user biometric characteristic and to process the user biometric characteristic to produce a user private key. In one embodiment, biometric identification device 12 is one of a smartcard, a personal digital assistant (PDA), a notebook computer, a mobile phone, or other computing device configured to sense at least one biometric characteristic of a user.

In one embodiment, biometric identification device includes a biometric sensor 30, a microprocessor 32, an encryption factor 34, and a communication interface 36 configured to interface with device interface 14 (illustrated in Figure 2). Biometric sensor 30 is configured to sense a biometric characteristic of a user and to generate data representing the biometric characteristic. Microprocessor 32 is coupled with the biometric sensor 30 and is operable to generate a user key based on the data representing the biometric characteristic and the encryption factor.

Biometric sensor 30 is any sensor configured to capture a biometric characteristic from the user. For example, in one embodiment, biometric sensor 30 is configured to capture a biometric characteristic, such as a fingerprint, an iris image, a retina image, a voice print, a facial image, a DNA sample, a palm print, etc., from the user. The biometric characteristic is a characteristic that differentiates one individual from the next. Embodiments of biometric sensor 30 include a fingerprint scanner, a retina scanner, an audio recorder, a camera, or other suitable biometric sensor.

One example of biometric sensor 30 is an array of MEMS switches or any other suitable fingerprint sensor operable to capture a fingerprint of the user. In one embodiment, the array of switches includes 256x256 switches configured to sense the ridges of the user fingerprint. The fingerprint sensor outputs a binary signal for each of the switches indicating whether each switch was pressed by contact with a ridge of the user's fingertip. The binary output is forwarded to microprocessor 32 for processing into a form useable as a biometric characteristic. Other fingerprint sensors may also be used.

Another embodiment of a biometric sensor 30 is a camera that captures image data representing an eye of the user. More particularly, biometric sensor 30 captures image data representing the iris and/or the retina of the eye. The image data is forwarded to microprocessor 32 for processing into a form useable as a biometric characteristic. Other examples of suitable biometric sensors 30 are audio recorders, retinal or iris scanners, facial recognition sensors, etc.

Biometric sensor 30 is coupled to microprocessor 32. Microprocessor 32 is additionally configured to access encryption factor 34. In one embodiment, microprocessor 32 is configured to further process the sensed biometric characteristic into a corresponding representation in a form useable as a biometric characteristic, such as a digital representation, an electronic representation, etc. Microprocessor 32 may apply one or more of any number of algorithms to convert data representing a fingerprint, retinal or iris scan, etc. into a simplified digital representation of the biometric characteristic. For example, in one embodiment, microprocessor 32 is configured to detect points of bifurcation and/or trifurcation in a user fingerprint captured by biometric sensor 30 and to generate data representing the pattern formed between the detected points as the biometric characteristic. The pattern data is simplified as compared to the data from which it is generated.

Encryption factor 34 is accessible by microprocessor 32 and is configured to be processed with data representing the biometric characteristic to generate a user key, such as a user private key. In exemplary embodiments, encryption factor 34 is stored in a memory of biometric identification device 12 that includes a type of RAM, a type of ROM, at type of a non-volatile memory, and/or other suitable memory type. In one embodiment, the memory additionally stores software, firmware, or other information needed for the general functioning of biometric identification device 12.

Communication interface 36 is coupled with microprocessor 32 and is configured to facilitate communications between biometric identification device 12 and device interface 14. In particular, communication interface 36 is operable to forward data from microprocessor to device interface 14 and vice versa.

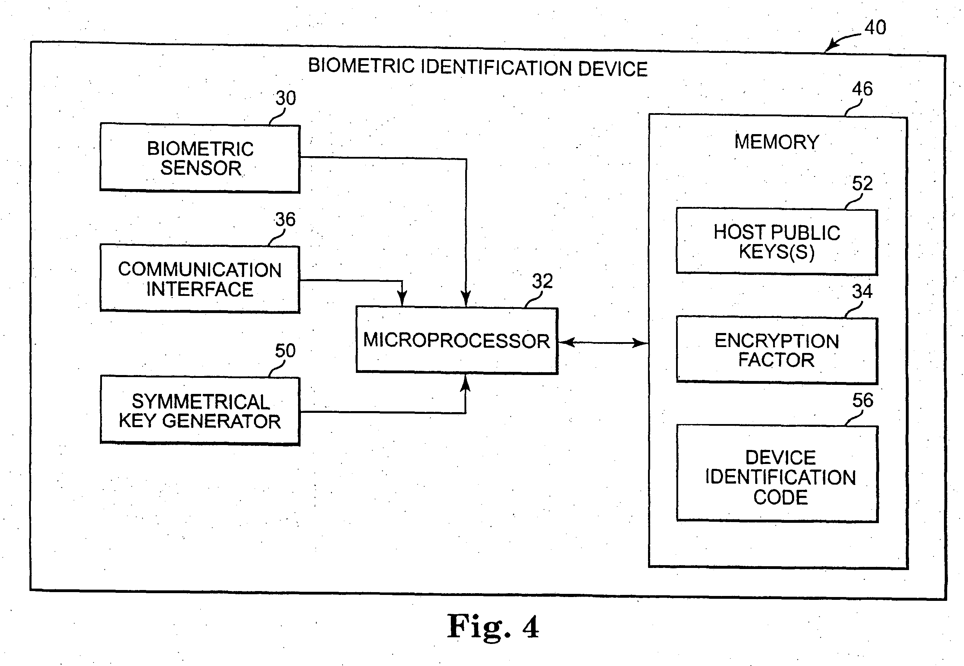

At 40, Figure 4 illustrates a block diagram of a more detailed example of biometric identification device 12 illustrated in Figure 3. Biometric identification device 40 includes biometric sensor 30, microprocessor 32, a memory 46 similar to the memory described above, and a communication interface 36. Each of biometric sensor 30, memory 46, and communication interface 36 communicates with microprocessor 32.

Communication interface 36 is configured to communicate with device interface 14 (illustrated in Figure 1). In one embodiment, biometric identification device 40 is a contact biometric identification device 40 including a communication interface 36 generally configured to be at least partially inserted into device interface 14 to form a direct, wired connection with device interface 14. In another embodiment, biometric identification device 40 is a contact-less biometric identification device 40 generally including a communication interface 36 configured to communicate wirelessly with device interface 14. If biometric identification device 40 is contact-less then, in one embodiment, communication between biometric identification device 40 and device interface 14 is further encrypted to maintain the overall security of the communication.

In one embodiment, memory 46 stores at least one host system public key 52, encryption factor 34, and a device identification code 56. Host system public keys 52 are generally publicly available keys. Each host system public key 52 is associated with a particular host system and being part of a host system private/public key pair. For example, in one embodiment in which biometric identification device 12 is configured for communication with at least one financial institution host system 16 (i.e., one or more banks, credit unions, credit institutions, credit bureaus, etc.), a host system public key 52 is stored in memory 46 for each financial institution. As such, biometric identification device 12 identifies which institution it is communicating with and uses the host system public key 52corresponding to the identified institution. In one embodiment where biometric identification device 12 is configured for communicating with a single host system 16, only one host system public key 52 is stored in memory 46.

Memory 46 additionally stores an encryption factor 34, which is similar to encryption factor 34 described above with respect to Figure 3. Encryption factor 34 is combined with a sensed biometric characteristic to generate a private key associated with the user whose biometric characteristic is sensed. Encryption factor 34 of biometric identification device 12 is substantially different from the encryption factors of other biometric identification devices. In one embodiment, encryption factor 34 is assigned to biometric identification device 12 by a random process. In one embodiment, encryption factor 34 is assigned to biometric identification device 12 in a more systematic process and is one of a series of numbers assigned to a respective biometric identification device 12. In one example, encryption factor 34 is a serial number assigned to biometric identification device 12.

In one embodiment, once encryption factor 34 is assigned to or created within biometric identification device 12, encryption factor 34 is static for the life of biometric identification device 12. In another embodiment, encryption factor 34 of biometric identification device 12 is time dependent. One example of a time dependent encryption factor 34 is a pseudo-random encryption factor generated using a predetermined algorithm stored in biometric identification device 12 and a time value. In this example, the same predetermined algorithm is stored in host system 16, and biometric identification device 12 includes a clock synchronized with a clock in communication with host system 16.

In one embodiment, device identification code 56 is a code, such as a number, assigned to biometric identification device 12 during manufacturing. Device identification code 56 is configured to differentiate the biometric identification device 12 from other biometric identification devices. Accordingly, no two biometric identification devices 12 have the same device identification code 56. In one example, device identification code 56 is systematically assigned to biometric device 12 as a serial number of biometric device 12. In another example, device identification code 56 is randomly assigned to biometric device 12 during manufacturing.

In one embodiment, biometric identification device 12 additionally includes a symmetrical key generator 50. In one example, symmetrical key generator 50 is any device capable of generating symmetrical keys for individual communication sessions between biometric identification device 12 and host system 16. Typically, symmetrical key generator 50 is a software routine run by microprocessor 32 to generate symmetrical keys for communication sessions with host system 16.

A symmetrical key is generally any key that can be used to both encrypt and decrypt information during an encrypted communication session between parties. In particular, a message to be sent from a sender to the recipient is processed with the symmetrical key to provide an encrypted message that is sent to the recipient. The recipient uses the same symmetrical key to decrypt the message. In particular, the recipient processes the message with the symmetrical key to produce a decrypted message. In general, symmetrical keys are considerably less computationally intensive than private/public key encryption. In one embodiment, symmetrical key generator 50 is a random number generator.

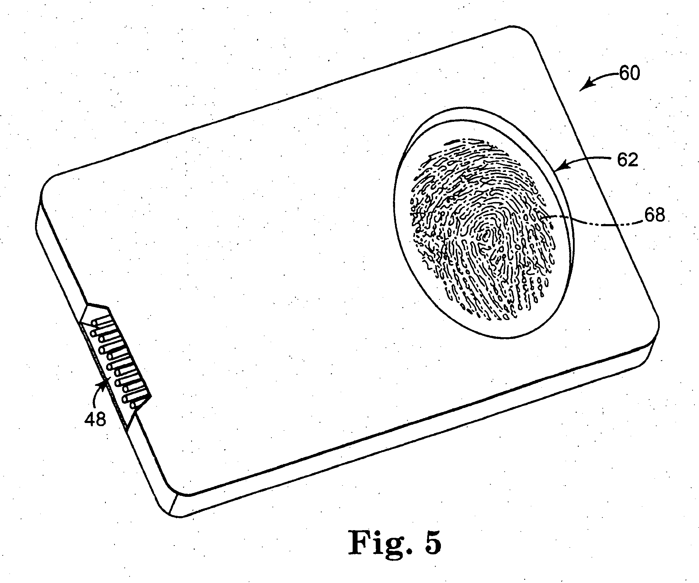

Figure 5 is a perspective view of one example of a biometric identification device 40 in the form of a biometric identification smart card 60. Typically, biometric identification smart card 60 is similar in size to a credit or identification card and can fit within the wallet of a user. In one example, biometric identification smartcard 60 includes a fingerprint sensor 62 as biometric sensor 30 (illustrated in Figure 4) and a plug as communication interface 36. Biometric identification smartcard 60 is configured for use in ATMs, at point-of-sale terminals, etc.

In one example, fingerprint sensor 62 is positioned upon the surface of biometric identification smartcard 60 spaced from the position of communication interface 36. During use, user 18 (illustrated in Figure 2) manipulates biometric identification smartcard 60 to position communication interface 36 of biometric identification smartcard 60 to interact with device interface 14. When communication interface 36 is positioned to interact with the device interface 14, fingerprint sensor 62 is positioned outside device interface 14. User 18 can then place a finger on fingerprint sensor 62 while communication interface 36 continues to interact with device interface 14. Fingerprint sensor 62 collects a fingerprint 68 (as indicated in Figure 5 with phantom lines) of user 18 and processes the data as described above into a form for use within biometric identification smart card 60. Other biometric identification devices include PDAs, mobile phones, notebook computers, or other electronic computing device including at least one biometric sensor.

### General Communication Method

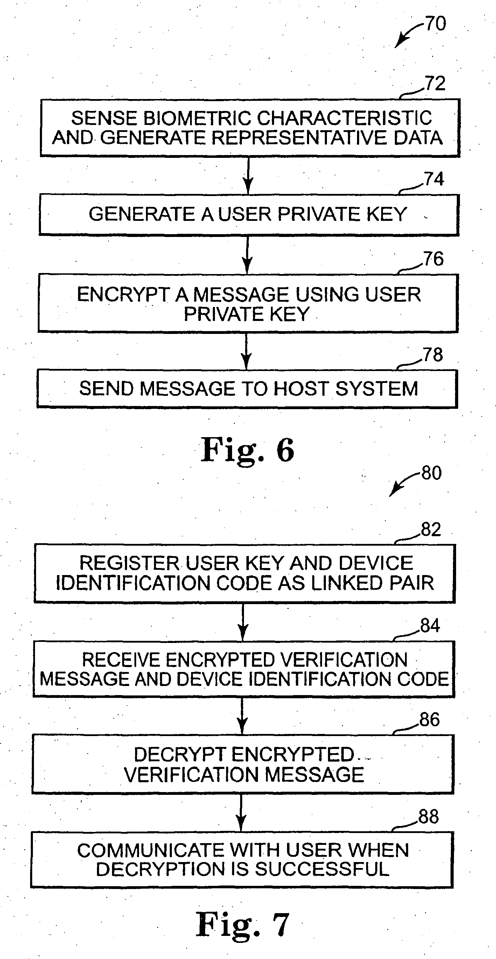

Figure 6 generally illustrates one embodiment of a method of user communication with a host system at 70. At 72, a biometric characteristic of the user is sensed and data representing the biometric characteristic is generated. At 74, a user private key is generated based on the data representing the biometric characteristic. At 76, a message is encrypted using the user private key, and at 78, the encrypted message is sent to the host system. In one embodiment, at 78, the device identification code is sent with the encrypted message to the host system.

Figure 6 generally illustrates method of communication 70 from a user perspective, whereas Figure 7 illustrates a method of communication 80 from the perspective of the host system. Therefore, portions of the method 80 of Figure 7 performed by the host system occur substantially simultaneously or in response to the user operations of method 70, as will be apparent upon reading this entire description.

Referring to Figure 7, method 80 is one embodiment of a method of a host system communicating with a user at 80. At 82, the host system receives from the user a user key and a corresponding device identification code. The device identification code identifies a device being used by the user. The host system registers the user key and the device identification code as a linked pair. The linked pair is stored within host system for future use to authenticate the user.

Following registration at 82, routine communication subsequently occurs beginning at 84. At 84, the host system receives an encrypted verification message and the identification code from the user. At 86, the host system uses the received identification code to determine the user key based on the previously-registered linked pair. The host system uses the user key to decrypt the encrypted verification message. Then at 88, the host system determines whether the decryption performed at 86 was successful in decrypting the encrypted verification message. If decryption is determined to have been successful, the user is authenticated as the registered user. Once the user is authenticated, the host system continues to communicate with the user.

### User Key Pair Generation

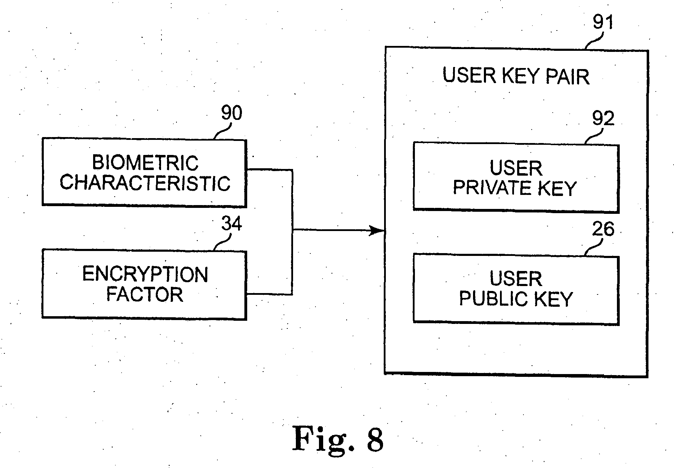

As generally described above with respect to method 70 illustrated in Figure 6, in one embodiment, a sensed biometric characteristic is used to generate a user private/public key pair. For example, Figure 8 is a diagram generally illustrating user key pair generation by biometric identification device 40 (illustrated in Figure 4). Biometric identification device 40 collects data representing a biometric characteristic 90, such as a fingerprint, etc., of user 18 via biometric sensor 30. Microprocessor 32 processes the data representing the biometric characteristic 90 with encryption factor 34, which is stored in memory 46 of biometric identification device 12 (illustrated in Figure 4), to generate a user private/public key pair 91.

For a given encryption factor 34, only the particular biometric characteristic 90 produces a particular user key pair 91. Conversely, different biometric characteristics, such as the fingerprint of a first user and the fingerprint of a second user, each produce a different user private/public key pair 91. Moreover, user private/public key pair 91 is generated without subjecting data representing the biometric characteristic 90 to long term storage within any memory. In this manner, no representation of biometric characteristic 90 is stored in a long term memory, thereby decreasing the possibility of theft and wrongful use of such representation of biometric characteristic 90.

User private/public key pair 91 includes a user private key 92 and a user public key 26. Messages encrypted with user private key 92 can generally only be decrypted with user public key 26 and vice versa. In general, user private key 92 is kept secret while user public key 26 may be published or otherwise disseminated to one or more parties. In one embodiment, user public key 26 and a corresponding device identification code 56 (illustrated in Figure 4) are disseminated to and registered with one or more parties.

During subsequent use, biometric identification device 12 sends an encrypted message with the device identification code 56 to a recipient. The message recipient uses the device identification code 56 to look up the corresponding user public key 26, which was previously registered with biometric identification code 56. A received message that can be decrypted with user public key 26 provides the message recipient with assurance that the message was sent by the user corresponding with user public key 26 (i.e., only by the user with access to a corresponding user private key 92). Similarly, a host system sending a message encrypted with user public key 26 is provided with assurances that the message will only be readable by a user corresponding with user public key 26.

In one embodiment, a host system, such as host system 16 (illustrated in Figure 2), is provided with a host private/public key pair similar to user private public key pair. The host system retains sole knowledge of a host private key included within the host private/public key pair. A host public key of the host private/public key pair is disseminated to parties likely to be in future communication with the corresponding host system. A user receiving a message that can be decrypted with the host public key has the assurance that the message was sent by the corresponding host system. Similarly, a user sending a message encrypted with host public key has the assurance that the message will only be readable by the corresponding host system.

Messages can be doubly-encrypted using the private key of the sender (i.e., one of the user and the host system) and the public key of the recipient (i.e., the other of the user and the host system). Doubly-encrypted messages can be decrypted using the corresponding public key of the sender.and the private key of the recipient. Such doubly-encrypted messages provide the sender with the assurance that only the recipient corresponding with the recipient private/public key pair will be able to decrypt the message and also provide the recipient with the assurance that only the sender corresponding to the sender private/public key pair could have sent the message.

### Establishing a Symmetrical Key for a Communication Session

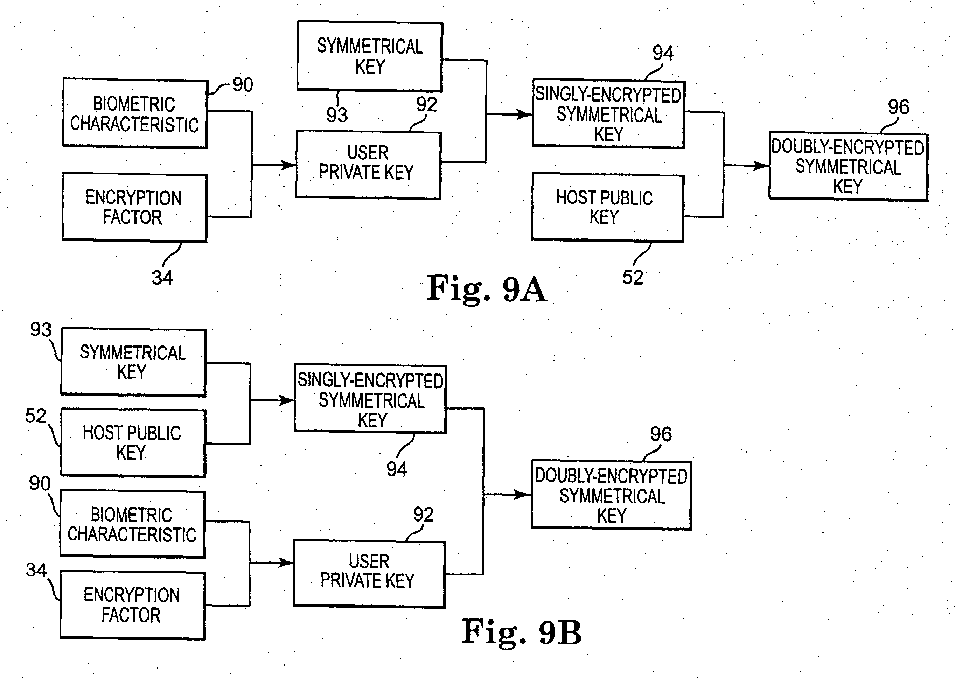

In one embodiment, biometric identification device 40 (illustrated in Figure 4) is additionally configured to generate a symmetrical key to be used to encrypt communication with host system 16 during a single communication session. However, to maintain a secure communication, the symmetrical key is communicated to the host system 16 (illustrated in Figure 2) in a secure manner. Figure 9A is a diagram illustrating the generation of a doubly-encrypted symmetrical key by biometric identification device 40.

Data representing biometric characteristic 90 of the user and encryption factor 34 stored in memory 46 of biometric identification device 40 are processed together to generate user private key 92 in a manner similar to that described above with reference to Figure 8. Microprocessor 32 subsequently generates a symmetrical key 93. Microprocessor 32 encrypts the newly generated symmetrical key 93 with user private key 92 to produce a singly-encrypted symmetrical key 94. In one embodiment, singly-encrypted symmetrical key 94 is sent to a host system.

In the example illustrated in Figure 9A, singly-encrypted symmetrical key 94 is additionally encrypted with host system public key 52 stored in memory 46 to produce a doubly-encrypted symmetrical key 96. By sending a message, in this case a symmetrical key, with double encryption using both private and public keys, the message assures the recipient that the message was received from a particular, verified user. The message also assures the sender that the doubly-encrypted message will only be received by a particular, verified recipient.

Figure 9B provides a diagram of a different way of generating a doubly-encrypted symmetrical key 96. In each of Figures 9A and 9B, the same components are used to generate a doubly-encrypted symmetrical key 96, but the order of processing or combining those components are changed. More particularly, as illustrated in Figure 9B, the newly generated symmetrical key 93 is encrypted with host system public key 52 to produce singly-encrypted symmetrical key 94. Additionally, the data representing biometric characteristic 90 is processed with encryption factor 34 to produce user private key 92. Subsequently, singly-encrypted symmetrical key 94 is encrypted with user private key 92 to produce doubly-encrypted symmetrical key 96. Doubly-encrypted symmetrical key 96 is then sent to a recipient, in this case, to host system 16. In one embodiment, doubly-encrypted symmetrical key 96 is sent with device identification code 56 for biometric device 12.

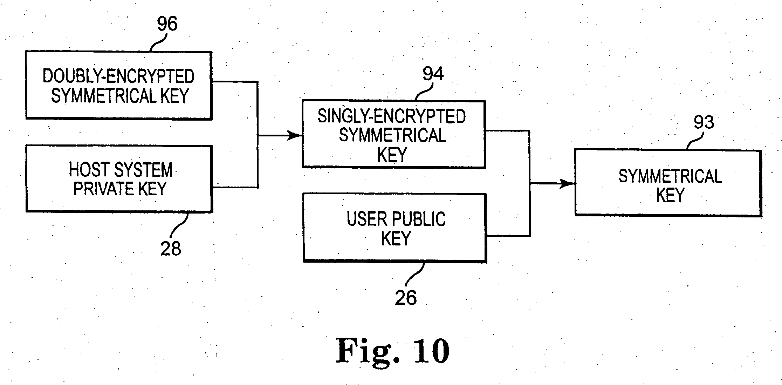

Figure 10 generally illustrates the decryption of a received, doubly-encrypted symmetrical key performed by host system 16 (illustrated in Figure 2). Processor 22 of host system 16 decrypts the received doubly-encrypted symmetrical key 96 with host system private key 28 to singly-decrypt doubly-encrypted symmetrical key 96. This produces singly-encrypted symmetrical key 94. Based upon device identification code 56 also received from biometric identification device 12, host system 16 reads a corresponding user public key 26 from memory 24. Subsequently, processor 22 uses user public key 26 to decrypt the singly-encrypted symmetrical key 94. This produces the clear or non-encrypted symmetrical key 93, which is in the form originally generated by biometric identification device 12. Different orders of decrypting doubly-encrypted symmetrical key 96 can also be used. For example, doubly-encrypted symmetrical key 96 may be decrypted by applying user public key 26 before host system private key 28.

Once symmetrical key 93 is decrypted by host system 16, host system 16 and biometric identification device 40 can communicate in an encrypted manner using only symmetrical key 93. Using the symmetrical key instead of the private/public user and host key pairs decreases the computational intensity of the communication, thereby increasing the speed of the communication and/or decreasing the resources needed for biometric identification device 12 and/or host system 16.

### Method of Communication

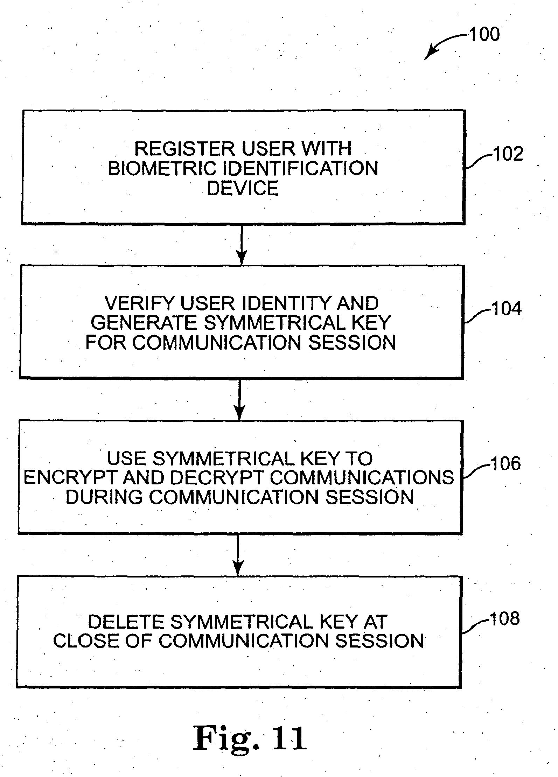

Figure 11 is a flow chart illustrating one embodiment of a general method of communication 100 using communication system 10 of Figure 2. A user is registered with biometric identification device 12 at 102, and the user uses the biometric identification device 12 with which the user has registered in a communication session during routine use at 104, 106, and 108. In general, at 102, user 18 is registered with a biometric identification device 12. More specifically, biometric identification device 12 generates a user public key based on a biometric characteristic of user 18, and transmits the user public key together with a device identification code of biometric identification device 12 to host system 16 for registration as a linked pair.

During subsequent routine use, at 104, biometric identification device 12 is used to communicate with a host system 16. More specifically, the identity of user 18 is verified by host system 16, and biometric identification device 12 generates a symmetrical key. Biometric identification device 12 securely sends the symmetrical key to host system 16 for use during the current communication session.

At 106, the symmetrical key is used for encryption and decryption during a single communication session between user 18 and host system 16. At 108, the communication session closes and the symmetrical key is deleted from the memories of all participating parties. In one embodiment, during a subsequent communication session involving routine use of biometric identification device 12, operations 104; 106, and 108 are repeated while operation 102 is not generally repeated after the initial registration of user 18.

### Registration

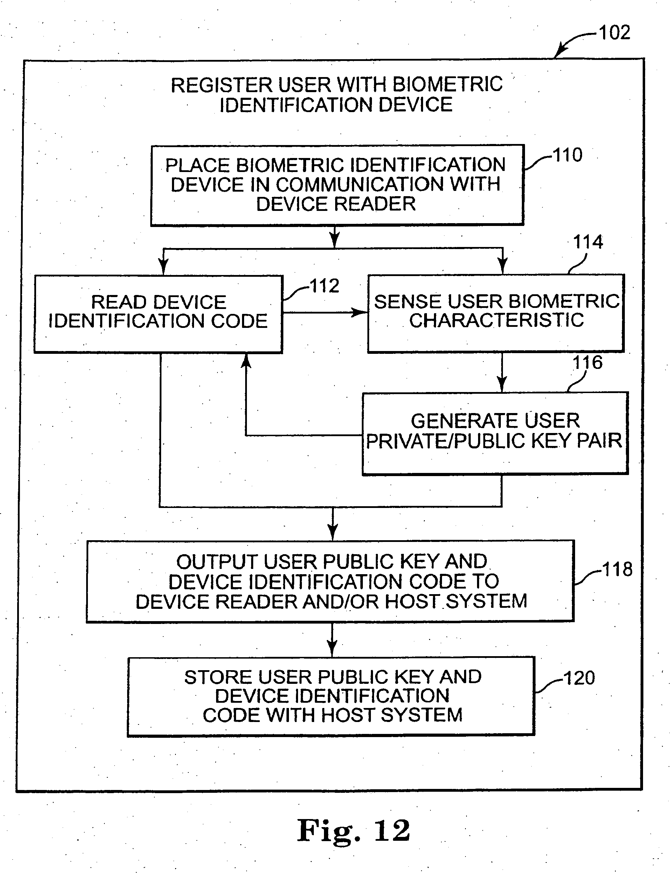

Figure 12 more particularly illustrates one embodiment of registering user 18 and biometric identification device 12 with host system 16 at 102 (illustrated in Figure 11) performed by communication system 10 as illustrated in Figure 1 or 2. In one embodiment, at 110, biometric identification device 12 is placed in communication with device interface 14 or, alternatively, with another device interface similar to device interface 14 located at a bank or other substantially secure site affiliated with host system 16.

Data is collected and generated in operations 112, 114, and 116 for subsequent forwarding to host system 16. More particularly, at 112, device interface 14 reads a device identification code from biometric identification device 12. At 114, user 18 interacts with a biometric sensor 30 of biometric identification device 12; and biometric sensor 30 senses the biometric characteristic of user 18. The biometric characteristic is processed to produce data representing the biometric characteristic. At 116, microprocessor 32 of biometric identification device 12 encrypts the data representing the biometric characteristic with the encryption factor 34 to generate a user private/public key pair in a manner similar to that described above with reference to Figure 8. Operations 114 and 116 can be performed any one of before, after, or simultaneously with operation 112. Other suitable alterations in the order the operations are performed during registration at 102 are also acceptable.

In one embodiment, at 118, the user public key generated at 116 and the device identification code read at 112 are transmitted from biometric identification device 12 to host system 16 via device interface 14 and network 20. At 120, host system 16 stores the user public key linked to the corresponding device identification code 56 in memory 24 for later use as a linked user public key/device identification code pair for the user.

In another embodiment, at 118, the user public key and the corresponding device identification code are published and/or otherwise made available to host system 16 and, in some instances, other host systems or entities. In one example, the registered user public key/device identification code pair is printed in one of a book, magazine, e-mail, etc. that is distributed to at least one host system 16. Host system 16 accesses the published information and stores the registered user public key/device identification code pair in memory 24. Any host system 16 having the registered public key/device identification code pair will be able to at least singly decrypt transmissions received from a particular user using biometric identification device 12.

### User Verification During Routine Use

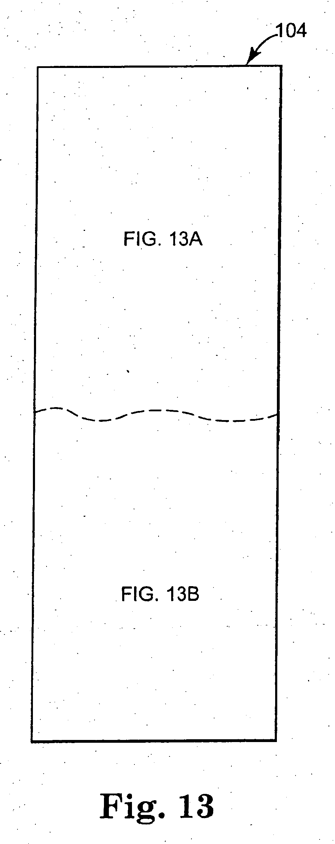

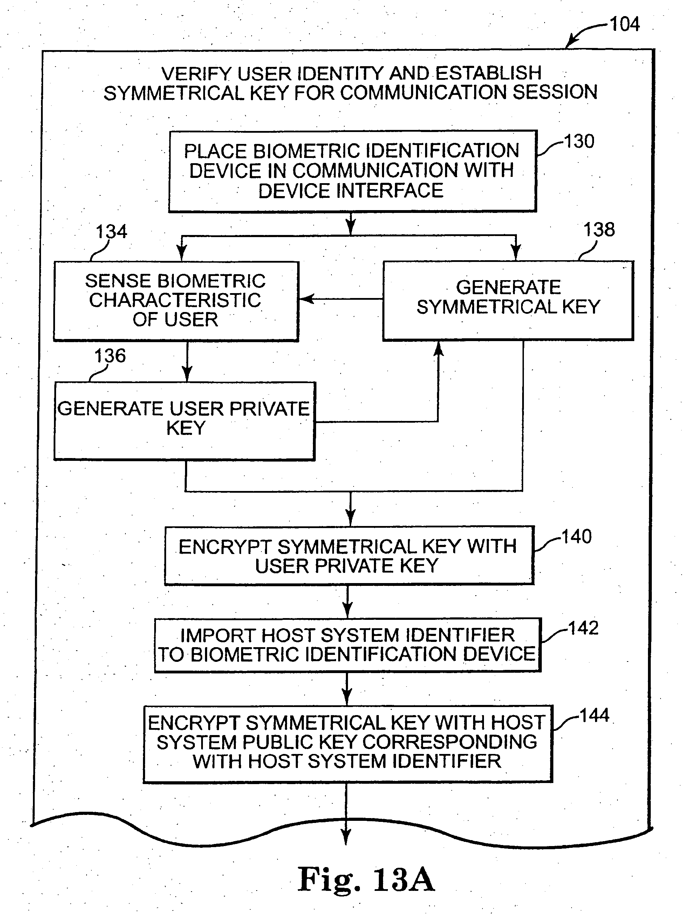

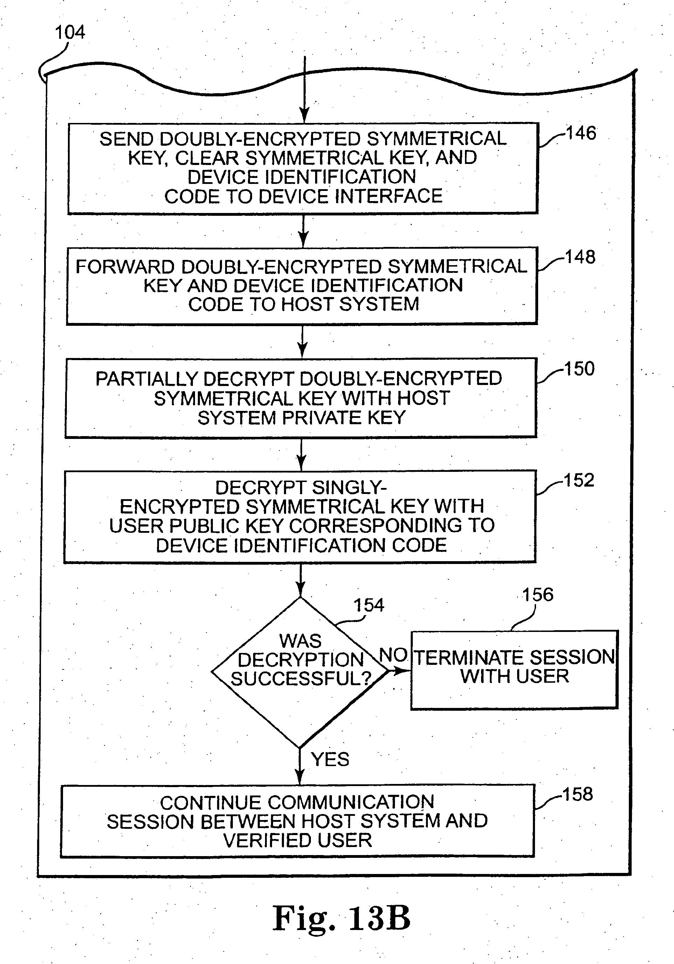

Figure 13 illustrates one embodiment of verifying user identity and establishing a symmetrical key for use in a communication session at 104 as part of the method 100 of Figure 11 as performed by communication system 10 of Figure 2. Generally, at 104, biometric identification device 12 generates and doubly-encrypts a symmetrical key, which biometric identification device 12 sends together with device identification code 56 to host system 16. The doubly-encrypted symmetrical key is received and fully decrypted by host system 16. Once host system 16 has the decrypted symmetrical key, future communications between biometric identification device 12 and host system 16 can be encrypted only with the symmetrical key.

More specifically, at 130, biometric identification device 12 is placed in communication with device interface 14 as described above. At 134, biometric identification device 12 senses a biometric characteristic of user 18 and captures data representing the sensed biometric characteristic. At 136, biometric identification device 12 encrypts the data representing the biometric characteristic with an encryption factor to generate, or more precisely, to regenerate, a user private key as described above with reference to Figure 8.

At 138, biometric identification device 12 generates a symmetrical key for use in encrypting communications between user 18 and host system 16 during the up-coming communication session. Process components 134 and 136 can be performed any one of before, after, or simultaneously with process component 138. At 140, biometric identification device 12 uses the user private key to encrypt the symmetrical key.

At 142, biometric identification device 12 imports host system identity information from host system 16. The host system identity information informs biometric identification device 12 as to the identity of the host system communicating with biometric identification device 12. Once host system 16 is identified to biometric identification device 12, biometric identification device 12 determines which host system public key corresponds to the particular host system 16 with which biometric identification device 12 is currently communicating. In one embodiment in which biometric identification device 12 is only configured to communicate with a single host system 16, operation 142 may be eliminated.

At 144, biometric identification device 12 encrypts the symmetric key a second time with the host system public key 52 identified in response to the host system identity information received at 142. This produces a doubly-encrypted symmetrical key. The order in which operations 134,136, 138, 140, 142, and 144 are completed may be varied in any suitable manner capable of producing the doubly-encrypted symmetrical key. In one embodiment, the order of performing operations 134, 136, 138, 140, 142, and 144 may be partially determined based on the process represented by the schematic illustrations of Figures 9A and 9B.

At 146, the doubly-encrypted symmetrical key and a device identification code are sent from biometric identification device 12 to device interface 14. At 148, device interface 14 forwards the doubly-encrypted symmetrical key and an encrypted device identification code 56 to host system 16 via network 20.

In an optional embodiment, the clear symmetrical key is also provided to device interface 14 for use in encrypted communication between device interface 14 and host system 16. This occurs in embodiments in which user 18 can input data directly to device interface 14 to be sent to host system 16. In this manner, all communications do not need to be routed through biometric identification device 12 for encryption before being sent to host system 16. In another embodiment, device interface 14 is not generally able to encrypt and/or decrypt messages using the symmetrical key, and all communications from the device interface 14 to host system 16 are routed through biometric identification device 12 for encryption/decryption.

At 150, host system 16 partially decrypts the doubly-encrypted symmetrical key with the host system private key 28 read from memory 24. At 152, processor 22 of host system 16 decrypts the now singly-encrypted symmetrical key with the stored user public key 26 linked in memory 24 to the device identification code 56 received at 148. If at 154, the decryption of singly-encrypted symmetrical key with the stored user public key 26 is determined to be successful, then at 158, the communication session between user 18 and host system 16 is continued at 106 (illustrated in Figure 11) using the symmetrical key.

In one embodiment, host system 16 may not know whether decryption the message was successful at 154 until an attempt is made to send a first reply message back to biometric identification device 12. For example, in one embodiment, host system 16 receives a doubly-encrypted symmetrical key sent by a user via biometric identification device 12 where the communicating user is not the user originally registered with the device identification code of biometric identification device 12. Host system 16 decrypts the doubly-encrypted symmetrical key with the user public key registered with the device identification code. Since a non-registered user encrypted the message, the registered user public key will improperly decrypt the encrypted message to produce an incorrect symmetrical key.

The incorrect symmetrical key does not match the symmetrical key generated by biometric identification device 12 for the current communication session. Without knowledge that the incorrect symmetrical key is not the symmetrical key of the current communication session, host system 16 sends a reply message to the communicating user encrypted with the incorrect symmetrical key. Since the host system 16 is not using the same symmetrical key as biometric identification device 12, biometric identification device 12 will not be able to decrypt the reply message and will therefore disable the communication session. In one example, host system 16 will only realize that the user was not verified when the biometric identification device disables the communication session. In one embodiment, host system 16 receives at least a preliminary indication of successful decryption before sending any reply message to biometric identification device 12. In one embodiment, when, at 154, it is determined that the decryption of the singly-encrypted symmetrical key was unsuccessful, biometric identification device 12 notifies host system 16 that the communication session is being disabled.

When a communication session is disabled host system 16 assumes that the user private key used by biometric identification device 12 to encrypt the symmetrical key likely was not the user private key linked to the user public key stored during registration. Following that logic, an incorrect user private key is likely to be the result of the biometric identification device 12 using a sensed biometric characteristic to generate the user private key that is not the same biometric characteristic sensed during registration. Therefore, host system 16 determines that the current bearer of biometric identification device 12 is not the rightful owner of biometric identification device 12. Consequently, at 156, host system 16 terminates the communication session with the current bearer of biometric identification device 12 and does not allow the current bearer of biometric identification device 12 to make any further communications with host system 16.

Although the method is described above as doubly-encrypting a symmetrical key for use throughout the remainder of the communication session between user 18 and host system 16, in other embodiments, no symmetrical key is generated. In these embodiments, the messages sent between user 18 and host system 16 are doubly-encrypted using the user private/public key pair and the host system private/public key pair in a similar manner as described above for doubly-encrypting a symmetrical key. Host system 16 is configured to send messages to biometric identification device 12 that are doubly-encrypted using the host system private key and the user public key, and the biometric identification device is configured to receive and decrypt received doubly-encrypted messages using the host system public key and the user private key. In one example, the symmetrical key or other messages are only singly-encrypted.

### Another Embodiment of a Communication System

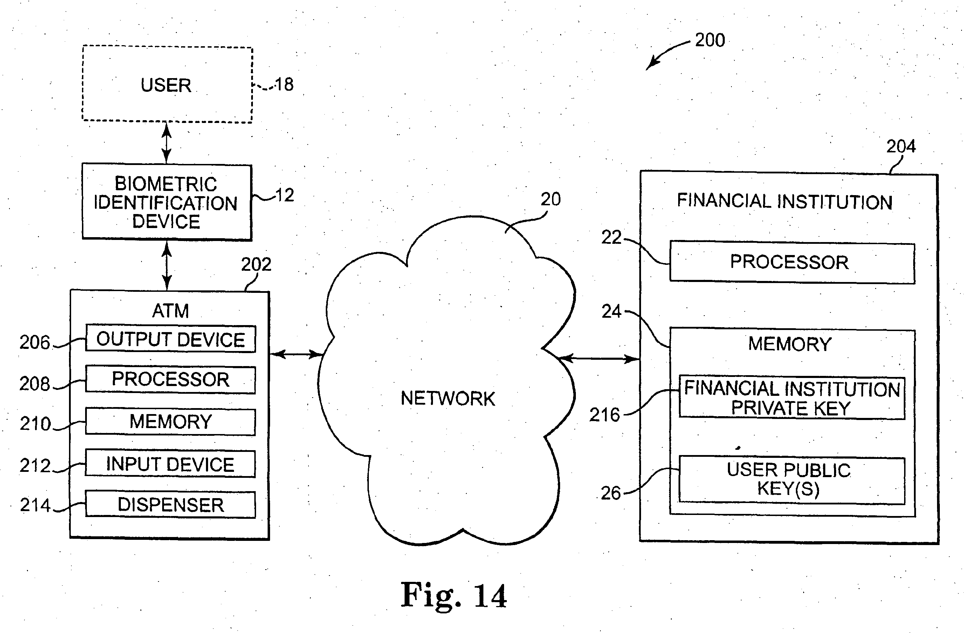

Figure 14 illustrates one exemplary embodiment of communication system 200 based on generalized communication system 10. Communication system 200 includes biometric identification device 12, an automated teller machine (ATM) 202, and a financial institution host system 204, such as a bank, credit center, credit bureau, etc. ATM 202 is configured to facilitate communication and financial transactions between user 18 and the remotely located financial institution 204. In this respect, ATM 202 and financial institution 204 generally communicate over network 20, such as a network including a dedicated network, an intranet, and/or the Internet.

In one embodiment, ATM 202 includes an output device 206, device interface 14, a processor 208, a memory 210, an input device 212, and a dispenser 214. Output device 206 is any suitable device for conveying audio, visual, and/or audiovisual messages to user 18. In one example, display 206 includes a display screen, a speaker, etc. Device interface 14 is as described above. In one embodiment, in which biometric identification device 12 is a smart card, device interface 14 (illustrated in Figure 1) includes a card reception slot with connector configured to connect to biometric identification device 12, specifically, to communication interface 36 (illustrated in Figure 2). Once connected, device interface 14 communicates with biometric identification device 12. In one embodiment, device interface 14 is configured to interact with biometric identification device 12 wirelessly and/or in another contact-free manner.

Processor 208 is any processor suitable for processing data to facilitate communication and transactions between user 18 and financial institution 204. Processor 208 is coupled to each of the other components of ATM 202 and facilitates interactions between the other components as well as generally controlling the operation of each of the other components. Input device 212 is any device providing a user interface facilitating user 18 communication with ATM 202.

Financial institution 204 is a particular host system 16. In one embodiment, financial institution 204 is any host system having a financial basis such as a bank, credit bureau, etc. In one embodiment, financial institution 204 is replaced with any other host system 16. Financial institution 204 includes processor 22 and memory 24 that stores a financial institution private key 216, which is similar to host system private key 28 (illustrated in Figure 1), and at least one user public key 26.

Communication system 200 functions in much the same way as communication system 10. However, communication system 200 is specifically adapted for use in remote financial transactions or financial account access by user 18. In particular, once user 18 is verified as the true user of biometric identification device 12, communications regarding the financial transaction or financial account are transmitted in an encrypted format using the symmetrical key. In another embodiment, communications regarding the financial transaction or financial account are transmitted in a double encrypted format using the user private/public key pair and the host system private/public key pair.

Since alternate and/or equivalent implementations may be substituted for the embodiments described herein without departing from the scope of the present invention, it is intended that this invention be limited only by the claims and the equivalents thereof.

## Claims

1. A biometric identification device (6/12/40/60), comprising:
a biometric sensor (30/62) operable to sense a biometric characteristic (68/90) of a user (18) and to generate data representing the biometric characteristic;
an encryption factor (34); and
a microprocessor (32) coupled to the biometric sensor and operable to generate a user key (26/92) based on the data representing the biometric characteristic and the encryption factor.

2. The biometric identification device of claim 1, further comprising a device identification code (56) that differentiates the biometric identification device from other biometric identification devices.

3. The biometric identification device of claim 1 or 2, wherein the encryption factor is time dependent.

4. The biometric identification device of claim 1, 2, or 3, wherein the user key is part of a user private/public key pair (91), and the processor is operable to generate the user private/public key pair based on the biometric characteristic and the encryption factor.

5. The biometric identification device of claim 1, 2, 3, or 4, wherein the microprocessor is further operable to generate a symmetrical key (93).

6. The biometric identification device of claim 1, 2, 3, 4, or 5 , wherein the microprocessor is operable to encrypt a symmetrical key (93) with the user key.

7. The biometric identification device of claim 1, 2, 3, 4, 5, or 6, further comprising:
a memory (46) storing the encryption factor and a host system public key (52) for at least one host system.

8. The biometric identification device of claim 7, wherein the microprocessor is operable to encrypt a symmetrical key with the host system public key and the user key.

9. A method of user communication with a host system (8), the method comprising:
sensing a biometric characteristic (68/90) of the user and generating data representing the biometric characteristic;
generating a user private key (92) based on the data representing the biometric characteristic;
encrypting a message (93) using the user private key; and
sending the message to the host system after the encrypting.

10. The method of claim 9, further comprising:
registering the user and a biometric identification device (6/12/40/60) with the host system, including:
sensing a biometric characteristic (68/90) of the user;
generating data representative of the sensed biometric characteristic;
generating a user private key (92) and a corresponding user public key (26) based on the data;
transmitting the user public key and a device identification code of the biometric identification device to the host system.
